(19) Europäisches Patentamt
European Patent Office
Office européen des brevets

(11) **EP 3 213 404 B1**

(12) **FASCICULE DE BREVET EUROPEEN**

(45) Date de publication et mention de la délivrance du brevet:
**11.11.2020   Bulletin 2020/46**

(21) Numéro de dépôt: **15808691.8**

(22) Date de dépôt: **26.10.2015**

(51) Int Cl.:
*H02P 27/08* (2006.01)          *H02P 23/00* (2016.01)
*H02P 25/03* (2016.01)

(86) Numéro de dépôt international:
**PCT/FR2015/052875**

(87) Numéro de publication internationale:
**WO 2016/066941 (06.05.2016 Gazette 2016/18)**

(54) **DISPOSITIF DE COMMANDE D'UNE MACHINE ELECTRIQUE TOURNANTE SYNCHRONE POLYPHASEE, ET MACHINE ELECTRIQUE REVERSIBLE DE VEHICULE AUTOMOBILE CORRES**

VORRICHTUNG ZUR STEUERUNG EINER MEHRPHASIGEN SYNCHRONEN ELEKTRISCHEN DREHMASCHINE UND ZUGEHÖRIGE UMKEHRBARE ELEKTRISCHE MASCHINE FÜR EIN KRAFTFAHRZEUG

DEVICE FOR CONTROLLING A POLYPHASE SYNCHRONOUS ROTATING ELECTRIC MACHINE, AND CORRESPONDING REVERSIBLE ELECTRIC MACHINE FOR A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **27.10.2014   FR 1460298**

(43) Date de publication de la demande:
**06.09.2017   Bulletin 2017/36**

(73) Titulaire: **Valeo Equipements Electriques Moteur 94046 Créteil Cedex (FR)**

(72) Inventeurs:
• **BERNARD, François-Xavier 94000 Creteil (FR)**
• **KOBYLANSKI, Luc 75014 Paris (FR)**

(74) Mandataire: **Duprez, Richard Valeo Equipements Électriques Moteur 2, rue André Boulle 94046 Creteil Cedex (FR)**

(56) Documents cités:
EP-A1- 2 696 498          FR-A1- 2 745 445
FR-A1- 2 895 597          US-A1- 2014 176 029
US-A1- 2014 306 629

**Description**

**DOMAINE TECHNIQUE DE L'INVENTION.**

La présente invention concerne un procédé et un dispositif de commande d'une machine électrique tournante synchrone polyphasée.

L'invention concerne aussi une machine électrique réversible de véhicule automobile comportant un tel dispositif.

**ARRIERE PLAN TECHNOLOGIQUE DE L'INVENTION.**

Des considérations d'économie d'énergie et de réduction de la pollution, surtout en milieu urbain, conduisent les constructeurs de véhicules automobiles à équiper leurs modèles d'un système de démarrage/ arrêt automatique, tel que le système connu sous le terme anglo-saxon de « Stop and Go ».

Une situation typique de « Stop and Go » est celle de l'arrêt à un feu rouge. Lorsque le véhicule s'arrête au feu, le moteur thermique est automatiquement stoppé, puis, quand le feu devient vert, le moteur est redémarré au moyen de la machine électrique réversible, comme suite à la détection par le système de l'enfoncement de la pédale d'embrayage par le conducteur, ou de toute autre action traduisant la volonté du conducteur de redémarrer son véhicule.

Un alternateur triphasé apte à fonctionner en démarreur, c'est-à-dire en moteur électrique, est décrit par la société VALEO ELECTRONIQUE dans la demande de brevet français FR2745445.

Un pont redresseur en sortie de l'induit de l'alternateur sert également de pont de commande des phases du moteur électrique, des transistors de puissance des bras du pont étant commandés par des séquences de signaux carrés délivrés par une unité de commande.

Une telle commande pleine onde de type "tout ou rien" est bien connue de l'homme de métier et est très simple à mettre en œuvre.

Dans les machines électriques réversibles les plus récentes, une machine électrique tournante synchrone polyphasée est raccordée à un convertisseur courant continu - courant alternatif - ou onduleur - réversible alimenté par la batterie de bord en mode moteur et par la machine électrique en mode générateur.

Le développement des techniques numériques permet de piloter l'onduleur en modulation de largeur d'impulsion, couramment appelée MLI ou encore PWM (en anglais "Pulse Width Modulation") pour obtenir un contrôle précis de la machine électrique dans chaque condition particulière de fonctionnement.

Des exemples de commandes MLI générées par un microprocesseur exécutant des programmes sont décrites dans la demande de brevet français FR2895597 au nom de la société VALEO EQUIPEMENTS ELECTRIQUES MOTEURS.

Toutefois, l'entité inventive a été confrontée au problème d'une limitation en fréquence de la commutation des onduleurs sur des machines électriques à grand nombre de pôles par phase qui tournent vite.

En effet, le traitement logiciel qui aboutit à l'élaboration des rapports cycliques des commandes MLI nécessite une fréquence de signal des signaux MLI bien supérieure à une fréquence électrique correspondant à la vitesse de rotation de la machine (typiquement supérieure d'un ordre de grandeur).

Du fait de la limitation en fréquence de la commutation des onduleurs, il est difficile de respecter ces ratios, si un nombre de paires de pôles par phase est élevé (La fréquence électrique est égale à la vitesse de rotation multipliée par le nombre de paires de pôles par phase).

Une solution habituellement adoptée dans ces circonstances est de commander les phases de façon classique en pleine onde, c'est-à-dire en générant une forme d'onde carrée à la fréquence électrique de la machine.

Cette commande est par nature à fréquence variable, puisque synchrone de la vitesse de la machine, et doit être particulièrement précise quant aux instants de commutation.

Si l'on veut rester dans un système moderne basé sur un microprocesseur exécutant des programmes et dans lequel on effectue les mesures, traitements et commandes en un temps de cycle constant, il existe une vraie difficulté pour réaliser la forme d'onde voulue en étant précis sur les instants des commutations.

En effet, on ne dispose pour la position que d'une résolution temporelle faible (puisque le ratio fréquence de calcul sur fréquence électrique est faible) qui ne permet pas d'assurer la précision voulue sur la forme de la tension de commande.

**DESCRIPTION GENERALE DE L'INVENTION.**

La présente invention propose d'utiliser la résolution d'un périphérique de génération de signaux modulés en largeur d'impulsion présent dans la plupart des microprocesseurs ou microcontrôleurs (compteur générateur de rampe programmable) pour maîtriser la précision temporelle des commutations.

L'invention concerne un dispositif de commande d'une machine électrique tournante synchrone polyphasée telle que défini par la revendication 1.

Selon une autre caractéristique du dispositif selon l'invention, la fréquence de signal est inférieure à une fréquence de commutation maximum prédéterminée de l'onduleur et la vitesse de rotation nominale correspond à une fréquence électrique nominale inférieure d'un ordre de grandeur à la fréquence de signal.

On tirera bénéfice d'une machine électrique réversible de véhicule automobile qui comprendra un dispositif de commande présentant les caractéristiques ci-dessus.

Ces quelques spécifications essentielles auront rendu évidents pour l'homme de métier les avantages apportés par l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

## BREVE DESCRIPTION DES DESSINS.

La **Figure 1** est un schéma électrique simplifié d'une machine électrique réversible de véhicule automobile comprenant un dispositif de commande selon l'invention.

La **Figure 2** montre un exemple de deux diagrammes de temps différents de tensions de phases (commande pleine onde ou MLI) produites par le dispositif de commande d'une machine électrique réversible de véhicule automobile selon l'invention.

Les **Figures 3a et 3b** illustrent respectivement des procédés de génération d'une commande MLI et d'une commande pleine onde connus de l'état de la technique.

Les **Figures 4a et 4b** illustrent respectivement la génération d'une commande pleine onde de type "tout ou rien" et de type "trois états" selon le procédé de l'invention.

La **Figure 5** est un diagramme états- transitions spécifiant la génération d'une commande pleine onde dans procédé de commande selon l'invention.

## DESCRIPTION DES MODES DE REALISATION PREFERES DE L'INVENTION.

Une machine électrique réversible 1 de véhicule automobile est généralement une machine électrique tournante polyphasée alimentée à partir d'une tension d'alimentation B+ du réseau électrique de bord 2, quand elle fonctionne en démarreur, ou fournissant de l'énergie électrique à ce réseau 2 quand elle fonctionne en alternateur.

Un convertisseur CC/CA réversible 3 connecté au stator 4 permet de réaliser ces deux modes de fonctionnement.

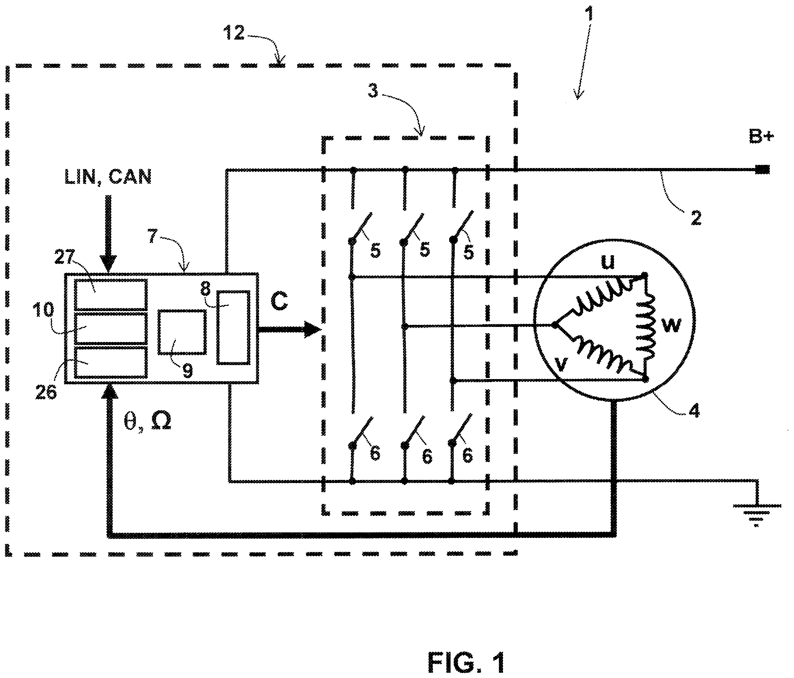

Comme le représente schématiquement la **Figure 1** (dans le cas d'une machine triphasée par simplification), le convertisseur CC/CA réversible 3 comporte des éléments de commutation à semi-conducteur 5, 6, le plus souvent des transistors de puissance de technologie MOSFET, organisés en pont 5, 6.

Chaque bras comporte un premier transistor de puissance 5 reliant un enroulement de phase u, v, w à la tension d'alimentation B+ (transistor dit "high side" 5) quand il est passant, et un second transistor de puissance 6 reliant cet enroulement de phase u, v, w à une masse (transistor dit "low side") quand il est passant.

Ces éléments de commutation 5, 6, sont pilotés C par une unité électronique de contrôle 7 de manière à ce que le convertisseur 3 commande un fonctionnement en mode alternateur de la machine électrique réversible ou un fonctionnement en mode démarreur ou moteur électrique de celle-ci.

Selon le procédé de l'invention, on commande C l'onduleur 3 soit en mode pleine onde, soit en modulation de largeur d'impulsion (MLI) pour autant qu'une fréquence électrique de la machine 1 ne conduise pas à utiliser une fréquence de signal F dépassant une fréquence de commutation Fc maximum des transistors de puissance 5, 6.

En effet, on considère que la fréquence de signal F de la commande MLI doit être égale à environ dix fois la fréquence électrique de la machine électrique 1.

La fréquence électrique étant égale au produit de la vitesse de rotation $\Omega$ (en nombre de tours par seconde) par le nombre de paires de pôles par phase p, il existe une vitesse de rotation nominale $\Omega 0$ de l'ordre de Fc/(10p) à ne pas dépasser en commande MLI pour que la fréquence de signal reste compatible avec les performances de l'onduleur 3.

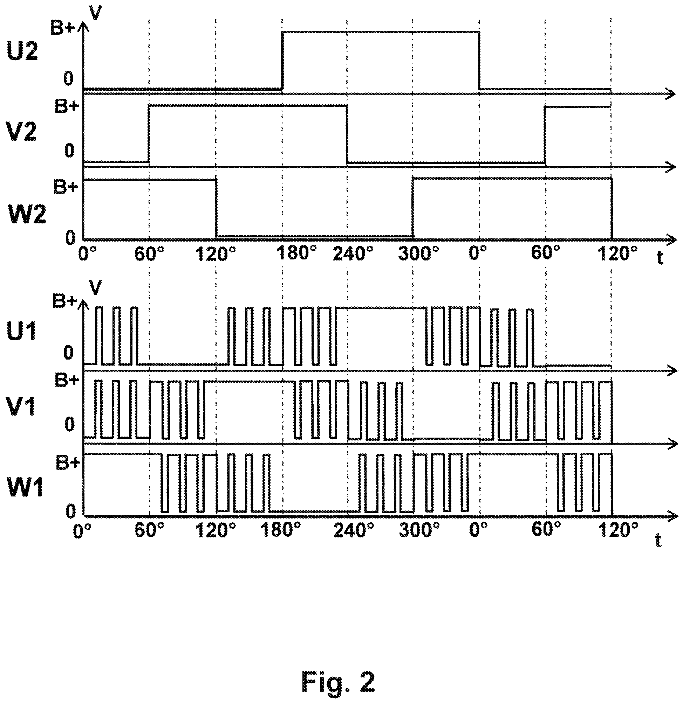

A partir de l'arrêt, tant qu'une vitesse de rotation $\Omega$ est inférieure à la vitesse de rotation nominale prédéterminée $\Omega 0$, l'onduleur 3 est commandé C en modulation de largeur d'impulsion, mais on notera que, dans d'autres formes de réalisation, il peut être souhaitable de commuter plus tôt en mode pleine onde, par exemple, pour une raison de rendement énergétique. Comme montré à la **Figure 2,** en modulation de largeur d'impulsion, des premières tensions de phases U1,V1,W1, sous la forme de signaux présentant un rapport cyclique variable, sont appliquées sur les enroulements de phases u,v,w du stator 4.

Quand la vitesse de rotation Ω est supérieure à cette vitesse de rotation nominale Ω0, l'onduleur 3 est commandé C en mode pleine onde. Des secondes tensions de phases U2,V2,W2 appliquées sur les enroulements de phases u,v, w du stator 4 ont des formes d'onde rectangulaires déphasées de 120°, comme montré la **Figure 2,** dans le cas d'une commande pleine onde de type "tout ou rien". La commande pleine onde étant à la fréquence électrique reste compatible avec les performances de l'onduleur 3.

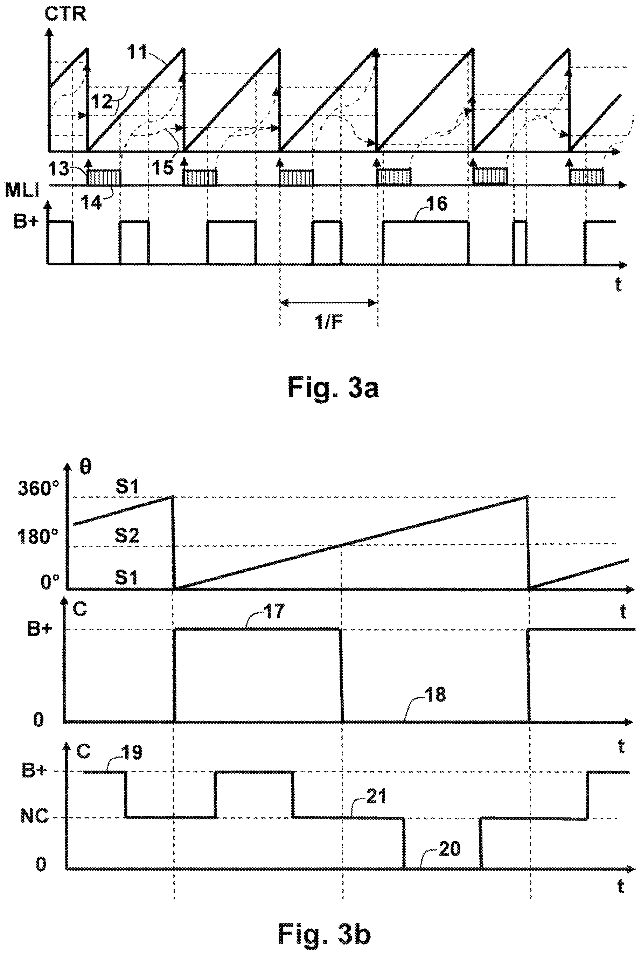

Selon un procédé bien connu de l'état de la technique illustré par la **Figure 3a,** la génération d'un signal MLI est basée sur une unité de contrôle 7 formée par un microprocesseur ou un microcontrôleur comprenant un périphérique MLI 8 programmable.

Une unité centrale de traitement 9 du microprocesseur 7 exécute un microprogramme stocké dans une mémoire 10 consistant essentiellement à comparer des rampes périodiques 11, générées par le périphérique MLI 8 au moyen d'un compteur CTR, au niveau 12 d'un signal de référence, généralement sinusoïdal, correspondant à une modulation des courants de phases nécessaire pour créer un champ tournant dans le stator 4.

Les rampes 11 sont synchronisées avec les dates 13 d'acquisition ou de calcul d'une position électrique d'un rotor. Un traitement des données 14 effectué à chaque période 1/F des rampes 11 permet le rafraîchissement 15 périodique du rapport cyclique du signal MLI 16.

La **Figure 3b** illustre un procédé connu de génération d'une commande pleine onde au moyen d'une sortie logique d'un microprocesseur 7.

Cette commande est utilisée, même sans contrainte particulière, pour des raisons de simplicité de commande ou de gain de performance.

Une première commande 17, 18 est dite "tout ou rien", ou "180°", et commande alternativement les transistors "high side" 5 et "low side" 6 d'un bras 5, 6 de l'onduleur 3 pour connecter une extrémité d'un enroulement de phase u, v, w soit 17 à la tension d'alimentation B+, soit 18 à la masse, quand la position angulaire θ franchit un premier seuil angulaire de commutation S1 valant 0° (modulo 360°), ou un second seuil angulaire de commutation S2 valant 180°.

Un deuxième commande 19, 20, 21 est dite "trois états", ou souvent "120°", et commande le bras 5, 6 de l'onduleur 3 en fonction de la position angulaire θ de façon à mettre l'extrémité de l'enroulement de phase u, v, w soit 19 à la tension d'alimentation B+, soit 20 à la masse, soit 21 à laisser la phase en l'air (fonctionnement en roue libre).

Mais, ainsi que cela a été rappelé en préambule, en utilisant une sortie logique du microprocesseur 7, on ne dispose pour la position angulaire θ que d'une résolution temporelle faible (puisque le ratio fréquence de calcul sur fréquence électrique est faible) qui ne permet pas d'assurer la précision voulue sur la forme de la tension de commande.

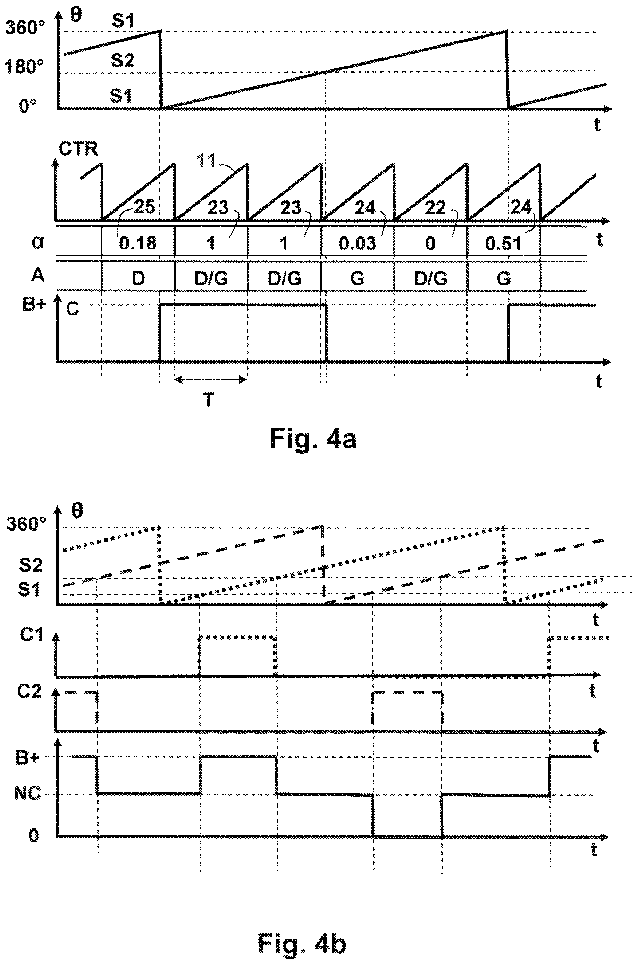

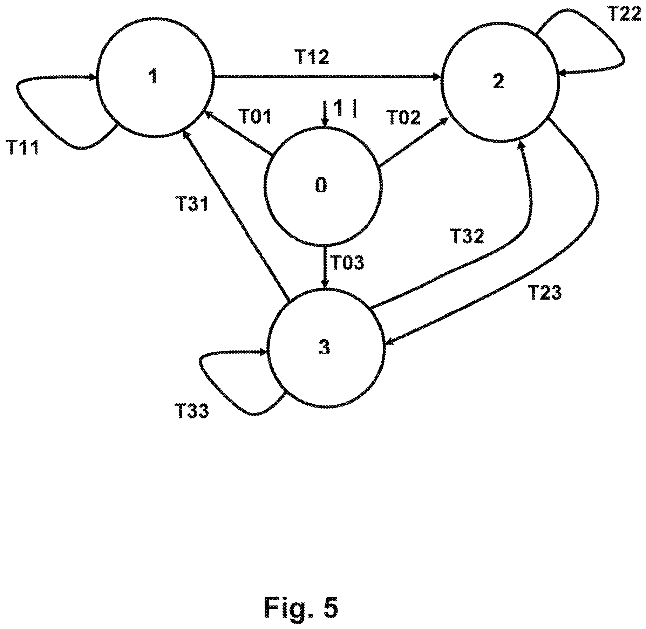

Le procédé selon l'invention repose donc sur l'utilisation de la résolution du périphérique de génération de signaux MLI 8 pour maîtriser la précision temporelle des commutations de la commande, comme il le sera maintenant expliqué en liaison avec les **Figures 4a, 4b et 5.**

Une machine à état, réalisée par un algorithme dans le microcontrôleur 7, calcule le rapport cyclique α du signal MLI à générer à chaque période T= 1/F de calcul. Le rapport cyclique 22, 23 vaut 0 ou 1 lorsque la phase u, v, w ne commute pas et prend une valeur intermédiaire 24, 25 au moment des commutations.

L'algorithme gère le point de comparaison du compteur CTR générant les rampes 11 du périphérique MLI 8 en inscrivant une valeur correspondant au rapport cyclique α recherché dans un registre approprié.

L'algorithme gère également la position A de l'impulsion MLI: soit le signal MLI commence par le niveau 1 (c'est l'alignement à gauche 24), soit par le niveau 0 (c'est l'alignement à droite 25).

La programmation de l'alignement 24, 25 du signal MLI dépend des caractéristiques du périphérique MLI 8 utilisé, notamment de l'existence du ou des bits spécifiques (alignement droite/ gauche, centré) dans un registre dédié, mais le principe général reste le même.

Pour la commande pleine onde C de type "tout ou rien", illustrée sur la **Figure 4a,** seule la commande des éléments de commutation "high side" 5 du côté de l'alimentation B+ est générée, la commande des éléments de commutation "low side" 6 du côté de la masse étant complémentaire, à la gestion des temps morts près. Le moment des commutations est déterminé par comparaison de la position angulaire θ avec un premier seuil angulaire de commutation S1 = 0° et un second seuil angulaire de commutation S2 = 180°.

Pour la commande avec passage en haute impédance NC, illustrée sur la **Figure 4b,** deux commandes C1, C2 sont générées par le microcontrôleur 7: l'une pour les éléments de commutation "high-side" 5, l'autre pour les éléments de commutation "low-side" 6. L'algorithme est dupliqué pour chacune des commandes C1, C2 en déphasant de 180° la position électrique θ pour les éléments de commutation "low-side" 6 de façon à garder les mêmes premier et second seuils angulaires de commutation S1, S2. Ces premier et second seuils de commutations S1, S2 sont de la forme S1= 90°-x/2 et S2= 90°+x/2, et on appelle x= S2 - S1 l'ouverture de la commande. Typiquement pour une commande dite "120°", S1= 30° et S2 = 150°.

Pour ce faire, la machine d'état, montrée sur la **Figure 5,** a besoin de connaître la position électrique θ à un premier instant $t_n$ (présent) et à un second instant $t_{n+1}$ (le futur) pour prédire l'instant de commutation et calculer le rapport cyclique α adéquat. Une position future $\theta(t_{n+1})$ est donnée en extrapolant à partir d'une position courante $\theta(t_n)$

EP 3 213 404 B1

et de la vitesse électrique ω(t_n) au premier instant t_n que l'on suppose inchangée (autant que de besoin, une prédiction de la position future θ(t_{n+1}) prend en compte d'autres facteurs, tels que l'accélération mesurée ou issue d'un modèle mécanique). L'algorithme vérifie si l'un des premier ou second seuils angulaires de commutation S1 ou S2 est compris entre la position courante θ(t_n) et la position future θ(t_{n+1}). Si tel est le cas, le rapport cyclique α n'est plus 0 ou 1, mais une valeur déterminée par une fraction de l'écart entre la position courante θ(t_n) et la position future θ(t_{n+1}).

Les positions et seuils angulaires θ, S1, S2 sont codés entre 0° inclus et 360°exclus. Le codage des grandeurs angulaires θ, S1, S2 utilise un entier de façon à bénéficier du débordement naturel de l'entier pour réaliser le repliement 0°= 360°. La relation entre la position future θ(t_{n+1}) au second instant t_{n+1} et la position courante θ(t_n) au premier instant t_n est donnée par la formule:

$$\theta(t_{n+1}) = \theta(t_n) + \omega(t_n).T$$

où ω(t_n) est la vitesse électrique au premier instant t_n et T une période de calcul, c'est-à-dire l'inverse de la fréquence de signal F du signal MLI.

La vitesse électrique ω est toujours positive. La position électrique θ est typiquement l'intégration de la vitesse électrique w.

Cette vitesse électrique w est déterminée à partir de la vitesse de rotation Ω obtenue à partir d'une mesure de position rotor fournie par un capteur de la machine électrique 1, et acquise par des moyens d'acquisition 26 du microprocesseur 7, ou bien, pour les machines sans capteur, par analyse des tensions de phases.

La machine à états qui permet l'émulation d'une commande pleine onde C sur le périphérique MLI 8 du microprocesseur 9 comporte quatre états, dont un état d'initialisation (état 0). Les états (0...3), et les transitions Tis (i= 0...3; s= 0...3) entre ces états, sont précisés dans la **Table I** ci-dessous et sur le diagramme de la **Figure 5.**

**Table I**

|  | Entrée | Sortie |  | Entrée | Sortie |
|---|---|---|---|---|---|
| **T11** | θ(t_{n+1}) - S1 < 0 | α = 0 | **T03** | Non(T22)&Non(T11) | α = 0 |
| **T22** | θ(t_{n+1}) - S2 < 0 | α = 1 | **T32** | Non(T33)&Non(T11 ) | α = (θ(t_{n+1}) - S1).F/ω(t_n) |
| **T33** | θ(t_{n+1}) - θ(t_n) > 0 | α = 0 | **T12** | Non(T11) | α = (θ(t_{n+1}) - S1).F/ω(t_n) |
| **T01** | T11 | α = 0 | **T23** | Non(T22) | α =1-(θ(t_{n+1}) - S2).F/ ω(t_n) |
| **T02** | T22&Non(T11) | α = 1 | **T31** | Non(T33)&T11 | α = 0 |

Le choix de l'alignement du signal MLI à gauche ou à droite dépend uniquement du premier ou du second seuil angulaire de commutation traversé par la position électrique θ (S1 ou S2): si c'est S1 on aligne à droite 25, si c'est S2 on aligne à gauche 24, si c'est ni l'un ni l'autre ça n'a pas d'importance car le rapport cyclique α est 0 ou 1.

Cet algorithme est limité par la résolution temporelle de la position électrique θ: il faut que deux positions électriques successives θ(t_{n+1}), θ(t_n) ne soient pas espacées de plus de la largeur de l'ouverture de la commande S2 - S1 afin de ne pas devoir générer deux fronts dans la même période MLI. Typiquement pour une commande de type "tout ou rien", il faut au moins deux points de position dans une période électrique (180°).

Pour la mise en œuvre de ce procédé de commande d'une machine électrique tournante synchrone polyphasée 1, l'unité électronique de contrôle 7 du dispositif de commande 12 selon l'invention, qui est formée par un microprocesseur, un microcontrôleur ou tout autre composant micro programmable, comprend donc, outre un périphérique de génération de signaux MLI 8, des moyens d'acquisition 26 de la vitesse de rotation Ω et des moyens de comparaison de cette vitesse de rotation Ω à une vitesse de rotation nominale prédéterminée Ω0.

Au dessus de cette vitesse de rotation nominale Ω0, de l'ordre de 300 à 400 Hz, l'unité centrale de traitement 9 du microprocesseur 7, exécute un premier sous programme permettant d'émuler une commande pleine onde C sur le périphérique MLI 8 de manière à rester compatible avec les performances en commutation de l'onduleur 3.

Ce premier sous-programme comprend des instructions représentatives de l'algorithme décrit ci-dessus, et notamment de la machine à états représentée sur la **Figure 5** et spécifiée dans la **Table 1.**

Ces instructions sont stockées dans une mémoire 10 du microprocesseur 7. Elles comprennent des instructions de chargement des registres de programmation du rapport cyclique et de l'alignement du signal MLI.

Un deuxième sous programme, dont le code est stocké également dans la mémoire 10 du microprocesseur 7, est exécuté quand la vitesse de rotation Ω de la machine électrique 1 est inférieure à la vitesse de rotation nominale Ω0.

5

Ce deuxième sous programme permet au périphérique MLI 8 de générer une commande MLI à une fréquence F de quelques KHz pour piloter l'onduleur 3, de manière connue en soi.

Dans un mode de réalisation particulier, le dispositif de commande 12 selon l'invention comprenant l'onduleur 3 et l'unité électronique de contrôle 7 est intégré sur le palier arrière d'une machine électrique réversible 1 de véhicule automobile.

Il s'agit d'une machine électrique réversible 1 moderne qui communique avec l'unité de contrôle moteur du véhicule via une interface 27 pour un réseau de terrain, par exemple de type LIN, CAN ou autres, intégrée dans le microprocesseur 7.

Du fait de la mise en œuvre d'un microprocesseur 7, le dispositif de commande 12 peut s'adapter facilement à diverses caractéristiques électriques de la machine électrique tournante 1 par simple changement de ses micro programmes, à la différence d'un dispositif de commande basé sur un ASIC par exemple, ou tout autre composant à logique câblée.

De plus, grâce au procédé selon l'invention qui permet, pour les grandes vitesses de rotation $\Omega$, d'émuler une commande pleine onde C avec la même architecture 8, 9, 10 que celle utilisée pour une commande MLI, les éléments de commutation à semi-conducteur 5, 6 de l'onduleur 3 n'ont pas besoin d'avoir une fréquence de commutation Fc élevée, et il n'est pas nécessaire de prévoir un autre périphérique dédié à la génération d'une commande pleine onde.

Il en résulte une réduction des coûts qui procure à la machine électrique réversible selon l'invention un avantage concurrentiel certain.

Comme il va de soi, l'invention ne se limite pas aux seuls modes d'exécution préférentiels décrits ci-dessus.

Les diagrammes de temps des tensions de phases U1,V1,W1 ; U2,V2,W2 ne sont donnés qu'à titre d'exemple pour une machine triphasée; des diagrammes de temps similaires pourraient illustrer une description se rapportant à une machine présentant un plus grand nombre de phases, notamment double triphasée.

Les valeurs numériques de la vitesse de rotation nominale $\Omega 0$ et de la fréquence de signal F sont données pour un type de machine électrique réversible déjà commercialisée par la société demanderesse que le procédé et le dispositif selon l'invention ont pour but d'améliorer.

D'autres valeurs numériques seront prédéterminées en fonction des caractéristiques électro-mécaniques d'autres types ou modèles.

L'invention embrasse donc toutes les variantes possibles de réalisation qui resteraient dans le cadre défini par les revendications ci-après.

## Revendications

1. Dispositif de commande (12) d'une machine électrique tournante synchrone polyphasée (1) du type de ceux comportant une unité électronique de contrôle (7) pilotant un onduleur (3) relié à un réseau électrique de bord (2) alimenté par une batterie (B+) et destiné à être connecté à des enroulements de phases (u,v,w) de ladite machine électrique tournante synchrone polyphasée (1), **caractérisé en ce que** ladite unité électronique de contrôle 7) comprend:

   - des moyens d'acquisition (26) d'une vitesse de rotation ($\Omega$) de ladite machine électrique tournante synchrone polyphasée (1);
   - un périphérique de génération de signaux modulés en largeur d'impulsion (8) à une fréquence de signal prédéterminée (F) comportant au moins un registre de programmation d'un rapport cyclique ($\alpha$) et d'un alignement (24, 25) dudit signal modulé en largeur d'impulsion (16);
   - des moyens de comparaison de ladite vitesse de rotation ($\Omega$) à une vitesse de rotation nominale prédéterminée;
   - une unité centrale de traitement (9) exécutant un premier sous-programme ou un second sous-programme chargeant périodiquement ledit registre de programmation pour générer lesdits signaux modulés en largeur d'impulsion (16) pilotant ledit onduleur de manière à produire des premières tensions de phases (U1,V1,W1) modulées en largeur d'impulsion ou des secondes tensions de phases (U2,V2,W2) pleine onde en fonction d'un état desdits moyens de comparaison;
   - des moyens de mémorisation (10) desdits premier et second sous-programmes.

2. Dispositif de commande (12) d'une machine électrique tournante synchrone polyphasée (1) selon la revendication 1 précédente, **caractérisé en ce que** ladite fréquence de signal (F) est inférieure à une fréquence de commutation maximum prédéterminée dudit onduleur (3) et ladite vitesse de rotation nominale correspond à une fréquence électrique nominale inférieure d'un ordre de grandeur à ladite fréquence de signal (F).

3. Machine électrique réversible (1) de véhicule automobile, **caractérisée en ce qu'**elle comprend, dans un fonctionnement en mode moteur, un dispositif de commande (12) selon l'une quelconque des revendications 1 ou 2 précédente.

## Patentansprüche

1. Steuervorrichtung (12) einer mehrphasigen drehenden elektrischen Synchronmaschine (1) von der Art derjenigen, die eine elektronische Kontrolleinheit (7) aufweisen, die einen Wechselrichter (3) steuert, der mit einem von einer Batterie (B+) gespeisten elektrischen Bordnetz (2) verbunden und dazu bestimmt ist, mit Phasenwicklungen (u, v, w) der mehrphasigen drehenden elektrischen Synchronmaschine (1) verbunden zu werden, **dadurch gekennzeichnet, dass** die elektronische Kontrolleinheit (7) enthält:

   - Erfassungseinrichtungen (26) einer Drehgeschwindigkeit ($\Omega$) der mehrphasigen drehenden elektrischen Synchronmaschine (1);
   - ein Peripheriegerät (8) zur Erzeugung von impulsbreitenmodulierten Signalen auf einer vorbestimmten Signalfrequenz (F), das mindestens ein Register zur Programmierung eines Tastverhältnisses ($\alpha$) und eines Abgleichs (24, 25) des impulsbreitenmodulierten Signals (16) aufweist;
   - Einrichtungen zum Vergleich der Drehgeschwindigkeit ($\Omega$) mit einer vorbestimmten Nenndrehgeschwindigkeit;
   - eine zentrale Verarbeitungseinheit (9), die ein erstes Teilprogramm oder ein zweites Teilprogramm ausführt, das das Programmierregister periodisch lädt, um die impulsbreitenmodulierten Signale (16) zu erzeugen, die den Wechselrichter steuern, um erste impulsbreitenmodulierte Phasenspannungen (U1, V1, W1) oder zweite Vollwellen-Phasenspannungen (U2, V2, W2) abhängig von einem Zustand der Vergleichseinrichtungen zu erzeugen;
   - Speichereinrichtungen (10) der ersten und zweiten Teilprogramme.

2. Steuervorrichtung (12) einer mehrphasigen drehenden elektrischen Synchronmaschine (1) nach dem vorhergehenden Anspruch 1, **dadurch gekennzeichnet, dass** die Signalfrequenz (F) niedriger ist als eine vorbestimmte maximale Schaltfrequenz des Wechselrichters (3), und die Nenndrehgeschwindigkeit einer elektrischen Nennfrequenz entspricht, die um eine Größenordnung niedriger ist als die Signalfrequenz (F).

3. Reversible elektrische Maschine (1) eines Kraftfahrzeugs, **dadurch gekennzeichnet, dass** sie bei einem Betrieb im Antriebsmodus eine Steuervorrichtung (12) nach einem der Ansprüche 1 oder 2 enthält.

## Claims

1. Control device (12) for controlling a polyphase synchronous rotating electrical machine (1), of the type having an electronic control unit (7) driving an inverter (3) connected to an on-board electrical network (2) supplied with power by a battery (B+) and intended to be connected to phase windings (u,v,w) of said polyphase synchronous rotating electrical machine (1), **characterized in that** said electronic control unit (7) comprises:

   - acquisition means (26) for acquiring a rotational speed ($\Omega$) of said polyphase synchronous rotating electrical machine (1);
   - a peripheral (8) for generating pulse width-modulated signals at a predetermined signal frequency (F), having at least one register for programming a duty cycle (a) and alignment (24, 25) of said pulse width-modulated signal (16);
   - comparison means for comparing said rotational speed ($\Omega$) with a predetermined nominal rotational speed;
   - a central processing unit (9) executing a first subroutine or a second subroutine periodically loading said programming register in order to generate said pulse width-modulated signals (16) driving said inverter so as to produce pulse-width modulated first phase voltages (U1,V1,W1) or full-wave second phase voltages (U2,V2, W2) as a function of a state of said comparison means;
   - memory means (10) for storing said first and second subroutines.

2. Control device (12) for controlling a polyphase synchronous rotating electrical machine (1) according to preceding Claim 1, **characterized in that** said signal frequency (F) is lower than a predetermined maximum switching frequency of said inverter (3) and said nominal rotational speed corresponds to a nominal electrical frequency an order of magnitude lower than said signal frequency (F).

3. Reversible electrical machine (1) for a motor vehicle, **characterized in that** it comprises, in motor mode operation, a control device (12) according to either one of preceding Claims 1 and 2.

**FIG. 1**

EP 3 213 404 B1

Fig. 2

Fig. 3a

Fig. 3b

Fig. 4a

Fig. 4b

Fig. 5

**EP 3 213 404 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2745445
- FR 2895597